# EUROPÄISCHE PATENTANMELDUNG

(11) **EP 4 273 804 A1**
(43) Veröffentlichungstag der Anmeldung: **08.11.2023**
(21) Anmeldenummer: 22172103.8
(22) Anmeldetag: 06.05.2022
(51) Int. Cl.: G06T 7/73

(54) **BESTIMMUNG EINER RÄUMLICHEN AUSRICHTUNG EINES GEGENSTANDS MITTELS KÜNSTLICHER INTELLIGENZ**

(71) Anmelder: Brillux GmbH & Co. KG, 48163 Münster (DE)
(72) Erfinder: Stempel, Dr. Sascha, 91054 Erlangen (DE); Hülsdünker, Arno, 48151 Münster (DE)
(74) Vertreter: Cohausz & Florack

(57) **Zusammenfassung**

Die Erfindung betrifft ein Verfahren zur Bestimmung einer räumlichen Ausrichtung eines zu manipulierenden Gegenstands, durchgeführt von mindestens einer Vorrichtung, das Verfahren umfassend: Erhalten von Bildinformationen über zumindest einen Teil einer Oberfläche des Gegenstands; Bestimmen der räumlichen Ausrichtung des Gegenstands zumindest teilweise basierend auf den erhaltenen Bildinformationen mittels eines auf künstlicher Intelligenz beruhenden computerimplementierten Modells, welches geeignet ist, basierend auf Bildinformationen über zumindest einen Teil einer Oberfläche des Gegenstands eine zugehörige räumliche Ausrichtung des Gegenstands zu bestimmen, wobei das auf künstlicher Intelligenz beruhende computerimplementierte Modell mittels synthetisch erzeugter Trainingsdaten umfassend synthetisch erzeugte Bildinformationen über zumindest einen Teil einer Oberfläche des Gegenstands als Eingangsdaten und zugehörige räumliche Ausrichtungen des Gegenstands als Ausgangsdaten trainiert wurde; und Manipulieren oder Steuern eines Manipulierens des Gegenstands basierend auf der zuvor bestimmten räumlichen Ausrichtung des Gegenstands.

## Beschreibung

### Gebiet

Die Erfindung betrifft ein von mindestens einer Vorrichtung durchgeführtes Verfahren zur Bestimmung einer räumlichen Ausrichtung eines zu manipulierenden Gegenstands, beispielsweise einer Dose auf einem Förderband. Die Erfindung betrifft ferner eine Vorrichtung und ein System, welche jeweils dazu eingerichtet sind oder Mittel umfassen, das Verfahren durchzuführen und/oder zu steuern.

### Hintergrund

Förderanlagen, wie beispielsweise Förder- oder Transportbänder, dienen dem Transport von Gütern und spielen in vielen industriellen Prozessen eine wichtige Rolle. Typische Einsatzgebiete solcher Förderanlagen sind die Herstellung und/oder Weiterverarbeitung von Gütern in industriellen Produktionsstätten. Insbesondere bei Stückgut, wie beispielsweise Dosen, Eimern, Kisten oder Paletten, ist es dabei häufig wünschenswert während des Transports eines jeweiligen Gegenstands dessen räumliche Ausrichtung zu bestimmen, beispielsweise um den Gegenstand korrekt für einen nachfolgenden Verfahrensschritt ausrichten und/oder positionieren zu können.

Herkömmliche Verfahren zur Bestimmung der räumlichen Ausrichtung von Gegenständen während des Transports auf einer Förderanlage basieren auf der Erkennung dedizierter Merkmale (beispielsweise von Strich- oder Matrix-Codes oder anderer festgelegter Designs), welche sich an bekannten Positionen auf dem Gegenstand befinden, mithilfe von Kameras oder Sensoren. Allerdings muss bei solchen Verfahren sichergestellt werden, dass die Kamera oder der Sensor genau auf das oder die Merkmal(e) ausgerichtet ist, da andernfalls eine Bestimmung der räumlichen Ausrichtung des Gegenstands nicht möglich ist. Typischerweise wird der Gegenstand daher so lange im Blickfeld der Kamera oder des Sensors bewegt, bis das oder die dedizierte(n) Merkmal(e) erkannt werden. Wird das bzw. werden die dedizierte(n) Merkmal(e) schließlich von der Kamera oder dem Sensor erkannt, kann über deren bekannte Position auf dem Gegenstand dann eine räumliche Ausrichtung des Gegenstands bestimmt werden.

Ein Nachteil solcher Verfahren liegt darin, dass der Transport bzw. eine Förderbewegung des Gegenstands zum Erkennen der Merkmale, insbesondere während des oben erwähnten Bewegens des Gegenstands im Blickfeld der Kamera oder des Sensors, unterbrochen werden muss, was einen hohen Zeitaufwand erfordert. Ein weiterer Nachteil der Erkennung dedizierter Merkmale liegt darin, dass bei Unlesbarkeit oder zumindest verschlechterter Lesbarkeit der Merkmale, beispielsweise durch deren Beschädigung oder Verdeckung, aber auch durch Über- oder Unterbelichtung oder mangelnde Bildschärfe und/oder -qualität, eine Bestimmung der räumlichen Ausrichtung ungenau oder sogar unmöglich wird.

Darüber hinaus hat ein derartiger Ansatz mit einer dedizierten Markierung den Nachteil, dass die entsprechende Markierung das Erscheinungsbild des entsprechenden Gegenstandes unerwünscht beinträchtigen kann.

Andere herkömmliche Verfahren zur Bestimmung der räumlichen Ausrichtung von Gegenständen während des Transports auf einer Förderanlage verwenden die äußeren Konturen und/oder die äußere Form des Gegenstands. Solche Verfahren sind allerdings insbesondere für konturarme Gegenstände ungenau oder sogar ungeeignet.

Vor diesem Hintergrund besteht ein Bedarf für Verfahren, Vorrichtungen und Systeme zur Bestimmung einer räumlichen Ausrichtung eines zu manipulierenden Gegenstands mit hoher Genauigkeit, wobei insbesondere ein geringerer zeitlicher Aufwand und somit eine verbesserte Prozesseffizienz, eine geringere Empfindlichkeit gegenüber äußeren Bedingungen und somit eine verbesserte Robustheit bzw. Zuverlässigkeit, sowie eine hohe Flexibilität hinsichtlich unterschiedlicher Gegenstände wünschenswert sind.

### Allgemeine Beschreibung einiger bevorzugter Ausführungsformen

Davon ausgehend ist es eine Aufgabe der vorliegenden Erfindung, ein von mindestens einer Vorrichtung durchgeführtes Verfahren zur Bestimmung einer räumlichen Ausrichtung eines zu manipulierenden Gegenstands bereitzustellen, wobei das Verfahren bei hoher Genauigkeit eine verbesserte Prozesseffizienz und/oder Robustheit bzw. Zuverlässigkeit aufweist. Ferner soll das Verfahren eine möglichst hohe Flexibilität hinsichtlich unterschiedlicher Gegenstände bieten, insbesondere also die Bestimmung einer räumlichen Ausrichtung von Gegenständen mit unterschiedlichen Formen, Oberflächen und/oder Beschriftungen ermöglichen.

Gemäß einem ersten Aspekt der vorliegenden Erfindung wird diese Aufgabe durch ein Verfahren gemäß Anspruch 1 gelöst. Bevorzugte und vorteilhafte Ausführungsformen des Verfahrens sind in den auf das Verfahren rückbezogenen abhängigen Ansprüchen offenbart.

Das von mindestens einer Vorrichtung durchgeführte Verfahren zur Bestimmung einer räumlichen Ausrichtung eines zu manipulierenden Gegenstands gemäß dem ersten Aspekt umfasst ein Erhalten von Bildinformationen über zumindest einen Teil einer Oberfläche des Gegenstands. Das Verfahren umfasst weiterhin ein Bestimmen der räumlichen Ausrichtung des Gegenstands zumindest teilweise basierend auf den erhaltenen Bildinformationen mittels eines auf künstlicher Intelligenz beruhenden computerimplementierten Modells, welches geeignet (bzw. trainiert) ist, basierend auf Bildinformationen über zumindest einen Teil einer Oberfläche des Gegenstands eine zugehörige räumliche Ausrichtung des Gegenstands zu bestimmen, wobei das auf künstlicher Intelligenz beruhende computerimplementierte Modell mittels synthetisch erzeugter Trainingsdaten umfassend synthetisch erzeugte Bildinformationen über zumindest einen Teil einer Oberfläche des Gegenstands als Eingangsdaten und zugehörige räumliche Ausrichtungen des Gegenstands als Ausgangsdaten trainiert wurde. Das Verfahren umfasst weiterhin ein Manipulieren oder Steuern eines Manipulierens des Gegenstands basierend auf der zuvor bestimmten räumlichen Ausrichtung des Gegenstands.

Es wird also ein computerimplementiertes und bildbasiertes Verfahren zur Bestimmung einer räumlichen Ausrichtung eines Gegenstands, beispielsweise einer Dose auf einem Förderband, mittels künstlicher Intelligenz bereitgestellt. Dabei wurde die künstliche Intelligenz zuvor mit synthetisch erzeugten Bildern des Gegenstands und zugehörigen räumlichen Ausrichtungen des Gegenstands trainiert. Nach der Bestimmung der räumlichen Ausrichtung wird der Gegenstand basierend auf der räumlichen Ausrichtung manipuliert, beispielsweise gedreht.

Dadurch, dass das auf künstlicher Intelligenz beruhende computerimplementierte Modell mittels synthetisch erzeugter Bildinformationen über zumindest einen Teil einer Oberfläche des Gegenstands als Eingangsdaten und zugehöriger räumlicher Ausrichtungen des Gegenstands als Ausgangsdaten trainiert wurde, erlernt das Modell eine, insbesondere nichtlineare, Abbildung zwischen den Bildinformationen und den räumlichen Ausrichtungen. Auf diese Weise ist das Modell geeignet, basierend auf erhaltenen Bildinformationen eine zugehörige räumliche Ausrichtung des Gegenstands zu bestimmen. Insbesondere muss der Teil der Oberfläche, über den Bildinformationen vorhanden sind, bei einem erfindungsgemäßen Verfahren hierzu keine dedizierten Merkmale zur Ausrichtungsbestimmung enthalten.

Das erfindungsgemäße Verfahren basiert in einer bevorzugten Ausführungsform nicht auf einer gezielten Mustererkennung bestimmter Merkmale, sondern auf einer Betrachtung und/oder einem Abfotografieren eines beliebigen (sichtbaren) Teils der Oberfläche des Gegenstands, vorzugsweise der gesamten aus einem vordefinierten Blickwinkel sichtbaren Oberfläche des Gegenstands. Das auf künstlicher Intelligenz beruhende computerimplementierte Modell kann in einer bevorzugten Ausführungsform also, nach dem Einlernen des Modells mit synthetischen Bildern, aus der Betrachtung und/oder dem Abfotografieren (eines Teils) der Oberfläche des Gegenstands unabhängig dedizierter Merkmale die räumliche Ausrichtung des Gegenstands erkennen und diese beispielsweise an eine Ausrichtungseinheit weitergeben, die, falls nötig, eine Anpassung der räumlichen Ausrichtung hin zu einem Sollwert durchführt.

Es muss daher bei einem erfindungsgemäßen Verfahren nicht sichergestellt werden, dass eine Kamera oder ein Sensor auf das oder die dedizierte(n) Merkmal(e) ausgerichtet ist, sodass das oben erwähnte Bewegen des Gegenstands im Blickfeld der Kamera oder des Sensors zu diesem Zweck entfällt. Auf diese Weise muss der Transport bzw. die Förderbewegung des Gegenstands, beispielsweise auf einem Förderband, nicht wie oben erwähnt unterbrochen und/oder gebremst werden. Stattdessen kann, durch eine zügige Erkennung der räumlichen Ausrichtung des Gegenstands mittels des auf künstlicher Intelligenz beruhenden computerimplementierten Modells, die Förderbewegung bzw. der Transport ununterbrochen, ungebremst und/oder kontinuierlich erfolgen, wodurch eine verbesserte Prozesseffizienz erreicht wird.

Dadurch, dass das Training des auf künstlicher Intelligenz beruhenden computerimplementierten Modells mittels synthetisch erzeugter Trainingsdaten erfolgt, kann das Modell mit vergleichsweise geringem Aufwand mit einer Vielzahl unterschiedlicher (synthetisch erzeugter) Trainingsdaten trainiert werden. Beispielsweise können die Trainingsdaten eine Vielzahl unterschiedlicher Ausrichtungen des Gegenstands, eine Vielzahl unterschiedlicher Hintergründe, eine Vielzahl unterschiedlicher Belichtungsverhältnisse und/oder eine Vielzahl von Bilddefekten umfassen. Dadurch, dass die Trainingsdaten synthetisch, insbesondere computergestützt, erzeugt werden, kann mit vergleichsweise geringem Aufwand eine große Menge unterschiedlicher Trainingsdaten erzeugt werden, basierend auf welchen das Modell anschließend trainiert werden kann.

Auf diese Weise ist die durch das Modell erlernte Abbildung zwischen den Bildinformationen und den räumlichen Ausrichtungen weniger empfindlich gegenüber variierenden äußeren Bedingungen wie beispielsweise variierenden Hintergründen, Belichtungsverhältnissen und/oder Bilddefekten, sodass ein erfindungsgemäßes Verfahren eine verbesserte Robustheit bzw. Zuverlässigkeit, beispielsweise bei nicht optimalen Belichtungsverhältnissen (z.B. Überbelichtung) und/oder bei schlechter Bildqualität (z.B. Unschärfe), bietet.

Das synthetische Erzeugen von Trainingsdaten ermöglicht es ferner, mit vergleichsweise geringem Aufwand Trainingsdaten für eine Vielzahl unterschiedlicher Gegenstände zu erzeugen, basierend auf denen das auf künstlicher Intelligenz beruhende computerimplementierte Modell anschließend trainiert werden kann. So können beispielsweise Trainingsdaten für Gegenstände mit unterschiedlichen Formen, Oberflächen, Kennzeichnungen, Markierungen und/oder Beschriftungen synthetisch erzeugt werden. Durch das synthetische Erzeugen der Trainingsdaten entfällt insbesondere ein üblicherweise aufwendiges Bereitstellen real erzeugter Trainingsdaten wie beispielsweise real aufgenommener Bilder des Gegenstands und real gemessener zugehöriger Ausrichtungen des Gegenstands. Auf diese Weise bieten erfindungsgemäße Verfahren vorteilhaft eine hohe Flexibilität hinsichtlich unterschiedlicher Gegenstände.

Es hat sich ferner herausgestellt, dass erfindungsgemäße Verfahren vorteilhaft eine hohe Verarbeitungsgeschwindigkeit bei gleichzeitig hoher Genauigkeit bieten. So lag eine Verarbeitungsgeschwindigkeit für den Schritt des Bestimmens der räumlichen Ausrichtung eines Ausführungsbeispiels bei einem durch die Erfinder durchgeführten Test im Mittel bei ungefähr 0,1 Sekunden, sodass die Geschwindigkeit des Systems primär durch die Geschwindigkeit der für das erhalten der Bildinformationen verwendeten Kamera begrenzt wurde. Ferner konnte eine Winkelabweichung bei diesem Test für 90 % der Winkelbestimmungen (je nach Objekt) von unter 3° oder sogar unter 2° erreicht werden, für 99 % der Testdaten noch von unter 5° oder sogar unter 3°. In einer bevorzugten Ausführungsform ist das auf künstlicher Intelligenz beruhende computerimplementierte Modell daher geeignet, die räumliche Ausrichtung des Gegenstands in weniger als 1 Sekunde, vorzugsweise in weniger als 0,2 Sekunden, besonders bevorzugt in ungefähr 0,1 Sekunden, zu bestimmen und/oder die räumliche Ausrichtung mit einer Genauigkeit von unter 5°, vorzugsweise unter 3°, zu bestimmen.

Die mindestens eine Vorrichtung, von der das Verfahren gemäß dem ersten Aspekt durchgeführt wird, umfasst in einer bevorzugten Ausführungsform einen Computer, eine Kamera, eine Lichtschranke, eine Dreheinheit, einen Bildschirm, und/oder ein computerlesbares Medium. Beispielsweise ist die mindestens eine Vorrichtung ein Computer. Beispielsweise ist das Verfahren ein computerimplementiertes Verfahren.

Der zu manipulierende Gegenstand umfasst beispielweise ein Stückgut. Dabei kann das Stückgut ein Transportgut sein, welches sich am Stück transportieren lässt, beispielsweise ein Gebinde, eine Packung, eine Kiste, ein Karton, eine Box und/oder ein Behälter sein. In einer besonders bevorzugten Ausführungsform ist der Gegenstand eine Dose oder ein Eimer, vorzugsweise gefüllt mit Lack oder Farbe. Wie oben beschrieben ist das Verfahren durch das synthetische Erzeugen der Trainingsdaten flexibel und effizient für unterschiedliche Arten von Gegenständen anwendbar.

Der Gegenstand wird in einer bevorzugten Ausführungsform mittels einer Förderanlage, vorzugsweise mittels einer Bandförderanlage, eines Rollenförderers und/oder eines Kettenförderers, besonders bevorzugt mittels eines Förderbands, Fließbands, Transportbands, Bandförderers, Gurtbandförderers und/oder Gurtförderers gefördert und/oder transportiert. Wie oben erläutert, erfolgt der Transport des Gegenstands auf einer der genannten Förderanlagen bei dem Verfahren vorteilhaft kontinuierlich und/oder ungebremst.

In einer bevorzugten Ausführungsform befinden sich zumindest auf einem Teil der Oberfläche des Gegenstands eine Beschriftung, ein (erstes), vorzugsweise rechteckiges, Etikett und/oder ein, vorzugsweise rechteckiger, Aufkleber.

Dabei kann die Beschriftung, das Etikett und/oder der Aufkleber etwa Informationen über den Gegenstand umfassen, vorzugsweise eine Bezeichnung des Gegenstands, Informationen über Eigenschaften des Gegenstands und/oder Informationen zur Herstellung, Verarbeitung und/oder Verwendung des Gegenstands. Die Informationen über den Gegenstand umfassen dabei vorzugsweise Informationen wie eine Mengenangabe, einen Hersteller- und/oder Produktnamen, einen Herstellungsort, einen Herstellungszeitpunkt, einen oder mehrere Inhaltsstoffe, einen oder mehrere Gefahrenhinweise und/oder einen oder mehrere Verwendungshinweise. Die Informationen liegen dabei vorzugsweise in zumindest zwei verschiedenen Sprachen vor. Beispielsweise umfasst die Beschriftung, das Etikett und/oder der Aufkleber zumindest ein grafisches Element, vorzugsweise ein Logo (z.B. Herstellerlogo), Symbol (z.B. Warnsymbol) und/oder Designelement (z.B. Farbbereich). Vorzugsweise umfasst die Beschriftung, das Etikett und/oder der Aufkleber eine optoelektronisch lesbare Schrift, vorzugsweise einen oder mehrere ein- oder zweidimensionale Barcodes, Strichcodes, Matrixcodes und/oder QR-Codes.

Im Falle eines zylinderförmigen Gegenstands (etwa einer Dose) kann das Etikett/der Aufkleber etwa ein die Mantelfläche (im Wesentlichen) ganz oder teilweise bedeckendes/r Etikett/Aufkleber sein.

Die vorgenannten, von der Beschriftung, dem Etikett und/oder dem Aufkleber umfassten Informationen können von dem auf künstlicher Intelligenz beruhenden computerimplementierten Modell vorteilhaft verwendet werden, um die (nichtlineare) Abbildung zwischen den Bildinformationen und den räumlichen Ausrichtungen zu erlernen. Dies ist insbesondere deshalb vorteilhaft, weil die vorgenannten Informationen ohnehin, beispielsweise in einem vorherigen oder nachfolgenden Prozessschritt und/oder zur Information eines möglichen Käufers, benötigt werden. So ermöglicht ein erfindungsgemäßes Verfahren eine Bestimmung der räumlichen Ausrichtung eines Gegenstands ohne den Mehraufwand, der durch das Versehen des Gegenstands mit dedizierten Merkmalen entstünde.

Während erfindungsgemäße Verfahren zur Ausrichtungsbestimmung keine speziell hierfür vorgesehenen Merkmale benötigen, können aber sämtliche sichtbaren Merkmale, auch dedizierte Merkmale, beispielsweise dedizierte Barcodes und/oder QR-Codes, und/oder fertigungsbedingte Merkmale, beispielsweise Schweiß-, Löt- und/oder Klebenähte, vorteilhaft verwendet werden, um die (nichtlineare) Abbildung zwischen den Bildinformationen und den räumlichen Ausrichtungen zu erlernen. In einer bevorzugten Ausführungsform enthalten die Bildinformationen daher Informationen über dedizierte und/oder fertigungsbedingte Merkmale. Derartige Merkmale enthalten typischerweise Informationen über eine jeweilige räumliche Ausrichtung des Gegenstands, die von dem auf künstlicher Intelligenz beruhenden computerimplementierten Modell vorteilhaft verwendet werden können.

Die räumliche Ausrichtung des Gegenstands entspricht in einer bevorzugten Ausführungsform einer räumlichen Orientierung und/oder einer Raumlage des Gegenstands. Dabei wird die räumliche Ausrichtung, räumliche Orientierung und/oder Raumlage in einer bevorzugten Ausführungsform durch mindestens einen, vorzugsweise durch genau einen, Winkel (beispielsweise in rad oder ° in Bezug auf eine Referenzausrichtung) eindeutig festgelegt.

Das eindeutige Festlegen der räumlichen Ausrichtung durch genau einen Winkel ist vorteilhaft, da das auf künstlicher Intelligenz beruhende computerimplementierte Modell auf diese Weise nur einen unbekannten Wert (den genau einen Winkel), und nicht mehrere unbekannte Werte (beispielsweise mehrere Winkel) bestimmen muss, wodurch eine höhere Genauigkeit als bei einer gleichzeitigen Bestimmung mehrerer Winkel und/oder Parameter erreicht werden kann.

In einer besonders bevorzugten Ausführungsform steht der Gegenstand auf einem Förderband, auf dem der Gegenstand transportiert wird, sodass die Position des Gegenstands durch das Förderband vorgegeben wird und die räumliche Ausrichtung des Gegenstands durch eine Drehung des Gegenstands um lediglich eine Achse (hier nämlich senkrecht zur Oberfläche des Förderbrands) eindeutig festgelegt wird. Beispielsweise ist dabei die Position des Gegenstands auf dem Förderband bzw. die Position im Raum bekannt oder nicht weiter relevant, sodass nur die Drehung des Gegenstands um eine Achse senkrecht zur Oberfläche des Förderbands bestimmt wird.

Das Erhalten von Bildinformationen ist oder umfasst in einer bevorzugten Ausführungsform ein Empfangen der Bildinformationen durch die mindestens eine Vorrichtung mittels einer Datenverbindung. Die Bildinformationen werden in einer bevorzugten Ausführungsform an die mindestens eine Vorrichtung übertragen, vorzugsweise von einer weiteren Vorrichtung, besonders bevorzugt von einer Kamera. So wird die räumliche Ausrichtung also bevorzugt mithilfe einer Kamera bestimmt und/oder erkannt. In einer bevorzugten Ausführungsform werden die Bildinformationen direkt und/oder unmittelbar, vorzugsweise ohne ein Zwischenspeichern der Bildinformationen, an die mindestens eine Vorrichtung übertragen. Hierdurch wird eine benötigte Kapazität eines Zwischenspeichers, beispielsweise eines Puffer- oder Cache-Speichers, vorteilhaft verringert.

Beispielsweise umfassen die Bildinformationen lediglich ein einziges (digitales) Standbild (digitales Foto). Es hat sich gezeigt, dass der beschriebene Ansatz bereits mit nur einem einzigen Bild aus einer einzigen Perspektive eine zuverlässige Bestimmung der räumlichen Ausrichtung ermöglicht.

Nichtsdestotrotz ist denkbar, dass die erhaltenen Bildinformationen auch mehrere Bilder (etwa zeitlich versetzt und/oder aus unterschiedlichen Perspektiven) umfassen können.

Die Bildinformationen über einen Teil einer Oberfläche des Gegenstands umfassen in einer bevorzugten Ausführungsform digitale Bilddaten, welche vorzugsweise ein digitales Bild des zumindest einen Teils einer Oberfläche des Gegenstands enthalten. Die digitalen Bilddaten sind in einer bevorzugten Ausführungsform in einer Bilddatei gespeichert. Die Bilddatei wird in einer bevorzugten Ausführungsform in einem komprimierten oder unkomprimierten Grafikformat gespeichert, vorzugsweise im Rohdatenformat (RAW-Format), PNG-Format, GIF-Format oder TIFF-Format, besonders bevorzugt im JPG- oder JPEG-Format. Durch die Verwendung komprimierter Grafikformate werden durch die typischerweise geringere Größe der einzelnen Bilddateien die benötigte Bandbreite und Speicherkapazität vorteilhaft reduziert.

In einer Ausführungsform liegen die digitalen Bilddaten in hoher Qualität vor. Dabei wird unter hoher Qualität beispielsweise eine Bildauflösung von mindestens 1 Megapixel (1.000.000 Pixel), vorzugsweise mindestens 3 Megapixel, besonders bevorzugt mindestens 5 Megapixel verstanden. Alternativ oder zusätzlich wird unter hoher Qualität beispielsweise eine Farbtiefe von mindestens 12 bit verstanden. Digitale Bilddaten mit hoher Qualität gemäß den obigen Erläuterungen ermöglichen eine besonders genaue Abbildung zwischen den Bildinformationen und den räumlichen Ausrichtungen durch das auf künstlicher Intelligenz beruhende computerimplementierte Modell, sodass die Verwendung solcher Bilddaten bei dem Trainieren und/oder bei dem Bestimmen der räumlichen Ausrichtung vorteilhaft ein genaueres Bestimmen der räumlichen Ausrichtung ermöglicht.

Andererseits hat sich aber gezeigt, dass durch den beschriebenen Ansatz gerade auch Bilddaten mit vergleichsweise niedriger Qualität eine überraschend genaue Bestimmung der räumlichen Ausrichtung ermöglichen. So können die Bilder beispielsweise verrauscht, verschwommen (etwa durch den sich in Bewegung aufgenommenen Gegenstand), über- oder unterbelichtet, teilverdeckt und/oder von niedrigerer als von oben angegebener Auflösung sein. Dabei wird unter einer niedrigen Qualität beispielsweise eine Bildauflösung von weniger als 1 Megapixel (1.000.000 Pixel), vorzugsweise von weniger als 0,5 Megapixel (500.000 Pixel), besonders bevorzugt von weniger als 0,3 Megapixel (300.000 Pixel) verstanden. So beträgt die Bildauflösung in einer bevorzugten Ausführungsform 512 x 512 Pixel (=262.144 Pixel). Alternativ oder zusätzlich wird unter niedriger Qualität beispielsweise eine Farbtiefe von höchstens 8 bit verstanden. So beträgt die Farbtiefe in einer bevorzugten Ausführungsform genau 8 bit. Die Verwendung derartiger Bilddaten reduziert bei hinreichend hoher Genauigkeit vorteilhaft die notwendigen Rechen- und Speicherkapazitäten.

In einer bevorzugten Ausführungsform weisen die erhaltenen Bildinformationen eine gleiche Auflösung und/oder Farbtiefe auf wie die die synthetisch erzeugten Bildinformationen. So weisen die Bilder, mit denen das auf künstlicher Intelligenz beruhende computerimplementierte Modell trainiert wird, vorzugsweise die gleiche Auflösung auf wie das Bild oder die Bilder, auf dem oder denen das Bestimmen der räumlichen Ausrichtung des Gegenstands zumindest teilweise basiert. Auf diese Weise wird das Modell mit derselben bzw. einer sehr ähnlichen Art von Informationen trainiert, die es bei der späteren Anwendung auch erhält, wodurch ein besonders effizientes Training ermöglicht wird.

Die Oberfläche des Gegenstands (sowohl im Rahmen des Trainings als auch beim Bestimmen der räumlichen Ausrichtung), über die Bildinformationen erhalten werden, entspricht typischerweise einer Teiloberfläche des Gegenstands (beispielsweise einer Mantelfläche oder nur einer Teilmantelfläche einer zylinderförmigen Dose). Beispielsweise werden im Rahmen der Bestimmung der Ausrichtung lediglich Bildinformationen über eine Teiloberfläche erhalten (etwa diejenige, die aus einer Perspektive sichtbar ist, etwa einen Teil einer Mantelfläche einer zylinderförmigen Dose), während im Rahmen des Trainings insgesamt Bildinformationen über eine größere Oberfläche des Gegenstands erhalten werden (beispielsweise über die gesamte Mantelfläche).

In einer bevorzugten Ausführungsform ist der Teil einer Oberfläche des Gegenstands, über die zur Bestimmung der räumlichen Ausrichtung Bildinformationen erhalten werden, teilweise oder vollständig sichtbar bzw. teilweise oder vollständig unverdeckt. Beispielsweise werden Bildinformationen über mindestens 50 %, vorzugsweise mindestens 70 %, besonders bevorzugt mindestens 90 % der (beispielsweise aus einer Perspektive möglichen sichtbaren) Oberfläche des Gegenstands erhalten.

Dadurch, dass im Rahmen des Trainings die Bildinformationen, wie oben beschrieben, einen Großteil der Oberfläche des Gegenstands (beispielsweise die Gesamtoberfläche des Gegenstands oder eine gesamte Teiloberfläche des Gegenstands) umfassen, steht dem auf künstlicher Intelligenz beruhenden computerimplementierten Modell eine vergleichsweise große Menge an Informationen zur Verfügung, um die räumliche Ausrichtung zu bestimmen, wodurch vorteilhaft eine erhöhte Genauigkeit bei der Bestimmung der räumlichen Ausrichtung erreicht werden kann.

Es hat sich jedoch gezeigt, dass die räumliche Ausrichtung des Gegenstands auch dann noch mit hinreichend hoher Genauigkeit bestimmt werden kann, wenn ein vergleichsweise großer Teil der (beispielsweise aus einer Perspektive möglichen sichtbaren) Oberfläche des Gegenstands verdeckt ist. In einer alternativen bevorzugten Ausführungsform ist daher die Oberfläche des Gegenstands teilweise oder vollständig verdeckt. So werden beispielsweise Bildinformationen über höchstens 50 %, vorzugsweise höchstens 30 %, besonders bevorzugt höchstens 10 % der (beispielsweise aus einer Perspektive möglichen sichtbaren) Oberfläche des Gegenstands erhalten.

In einer bevorzugten Ausführungsform umfasst das Bestimmen der räumlichen Ausrichtung ein Berechnen, Ermitteln und/oder Erkennen der räumlichen Ausrichtung. Als Resultat des Bestimmens der räumlichen Ausrichtung wird in einer bevorzugten Ausführungsform zumindest eine beobachtbare Variable, beispielsweise ein Winkel, erhalten. Wie oben erwähnt legt die zumindest eine beobachtbare Variable in einer bevorzugten Ausführungsform jedenfalls eine räumliche Ausrichtung des Gegenstands eindeutig fest.

Dass das Bestimmen auf Bildinformationen basiert, bedeutet in einer bevorzugten Ausführungsform, dass die räumliche Ausrichtung unter Benutzung der Bildinformationen berechnet, ermittelt und/oder erkannt wird. Beispielsweise verarbeitet das auf künstlicher Intelligenz beruhende computerimplementierte Modell die Bildinformationen.

Dass die räumliche Ausrichtung zugehörig zu den Bildinformationen ist, bedeutet beispielsweise, dass der Gegenstand auf einem Bild, aus dem die Bildinformationen abgeleitet sind, die räumliche Ausrichtung aufweist.

Sowohl im Rahmen des Trainierens des computerimplementierten Modells als auch im Rahmen seiner Anwendung (also bei einem Bestimmen einer räumlichen Ausrichtung), können die Bildinformationen als Eingangsdaten (*input data*) des auf künstlicher Intelligenz beruhenden computerimplementierten Modells verwendet werden. Beispielsweise entspricht die räumliche Ausrichtung den Ausgangsdaten (*output data*) des genannten Modells. In einer bevorzugten Ausführungsform umfassen die Eingangsdaten einen mehrdimensionalen Tensor, vorzugsweise einen vierdimensionalen (4D) Tensor der folgenden Größe: (Bildanzahl) x (Bildbreite in Pixeln) x (Bildhöhe in Pixeln) x (Tupel der Pixelfarbe), wobei besonders bevorzugt die Bildanzahl eins (1) beträgt und die Pixelfarbe durch ein Dreier-Tupel (3er Tupel) im Rot-Grün-Blau (RGB) Farbraum festgelegt wird. In einer besonders bevorzugten Ausführungsform umfassen die Eingangsdaten also einen 4D-Tensor der Größe 1 x (Bildbreite in Pixeln) x (Bildhöhe in Pixeln) x 3. Es werden somit in einer bevorzugten Ausführungsform digitale Bilder jeweils einzeln ausgewertet und in ihrer Gesamtheit als Eingangsdaten verwendet.

In einer bevorzugten Ausführungsform umfasst das auf künstlicher Intelligenz beruhende computerimplementierte Modell ein künstliches neuronales Netz (*Artificial Neural Network,* ANN), vorzugsweise ein faltendes neuronales Netz (*Convolutional Neural Network,* CNN). In einer besonders bevorzugten Ausführungsform handelt es sich bei dem Modell um einen *Deep Learning* Ansatz mit einem CNN-Layer. Das Modell wird in einer bevorzugten Ausführungsform als Algorithmus implementiert.

In einer bevorzugten Ausführungsform wird das Modell mit einem maschinellen Lernverfahren, vorzugsweise einem überwachten maschinellen Lernverfahren (*supervised learning*), trainiert. Das auf künstlicher Intelligenz beruhende, insbesondere das mit einem überwachten maschinellen Lernverfahren trainierte und/oder auf einem CNN basierende, computerimplementierte Modell ermöglicht vorteilhaft eine komplexe und/oder nichtlineare Abbildung zwischen den Bildinformationen und den räumlichen Ausrichtungen. Auf diese Weise kann vorteilhaft eine erhöhte Genauigkeit der Bestimmung der räumlichen Ausrichtung erreicht werden.

Synthetisch erzeugte Daten und/oder Informationen umfassen in einer bevorzugten Ausführungsform Daten und/oder Informationen, die künstlich und/oder computergestützt erzeugt werden. Das Erzeugen dieser Daten und/oder Informationen erfolgt dabei in einer bevorzugten Ausführungsform mittels mindestens eines Algorithmus. Dadurch, dass die Trainingsdaten künstlich und/oder computergestützt erzeugt werden, kann, wie oben bereits beschrieben, mit vergleichsweise geringem Aufwand eine große Menge an Trainingsdaten erzeugt werden, wodurch das erfindungsgemäße Verfahren sowohl eine verbesserte Robustheit bzw. Zuverlässigkeit hinsichtlich variierender äußerer Bedingungen als auch eine hohe Flexibilität hinsichtlich unterschiedlicher Gegenstände bietet.

Besonders vorteilhaft ist es, wenn die Trainingsdaten ausschließlich synthetisch erzeugte Trainingsdaten umfassen. So ist bei der Verwendung ausschließlich synthetisch erzeugter Trainingsdaten kein Bereitstellen realer Trainingsdaten notwendig. Beispielsweise entfällt ein Aufnehmen, Übertragen, Abspeichern und/oder Bearbeiten realer Trainingsfotos, wodurch Strom, Bandbreite, Speicherplatz sowie Rechenkapazitäten eingespart werden können. Hierbei hat sich überraschend gezeigt, dass, auch wenn das auf künstlicher Intelligenz beruhende computerimplementierte Modell keine einzigen realen Trainingsdaten (also etwa reale Fotos der Gegenstände) als Eingangsdaten zum Trainieren erhalten hat, dennoch eine hohe Zuverlässigkeit und Genauigkeit erreicht werden.

In einer bevorzugten Ausführungsform umfasst das Manipulieren des Gegenstands basierend auf der zuvor bestimmten räumlichen Ausrichtung des Gegenstands eine unmittelbare und/oder direkte Manipulation des Gegenstands durch die mindestens eine Vorrichtung. Alternativ kann das Steuern eines Manipulierens auch eine mittelbare und/oder indirekte Manipulation (etwa durch Steuern einer anderen Vorrichtung) des Gegenstands umfassen.

Dass das Manipulieren oder das Steuern eines Manipulierens auf der zuvor bestimmten räumlichen Ausrichtung basiert, bedeutet in einer bevorzugten Ausführungsform, dass das Manipulieren und/oder das gesteuerte Manipulieren von der zuvor bestimmten räumlichen Ausrichtung abhängt, wobei vorzugsweise eine Art der Manipulation (beispielsweise ein Drehen) und/oder ein Maß an Manipulation (beispielsweise ein bestimmter Drehwinkel) unter Verwendung der räumlichen Ausrichtung ermittelt wird.

Durch das Manipulieren des Gegenstands, entweder durch die mindestens eine Vorrichtung oder durch die mindestens eine weitere Vorrichtung, ist es möglich, die räumliche Ausrichtung des Gegenstands in einer vordefinierten und/oder gewünschten Weise zu steuern. In einer bevorzugten Ausführungsform wird also durch das Manipulieren und/oder durch das Steuern eines Manipulierens sichergestellt, dass der Gegenstand nach dem Manipulieren oder dem Steuern eines Manipulierens eine vordefinierte und/oder gewünschte räumliche Ausrichtung aufweist.

Vorzugsweise wird ein erfindungsgemäßes Verfahren auf eine Vielzahl von Gegenständen einer gleichen Art angewandt. Dadurch wird, in der bevorzugten Ausführungsform, eine gleichmäßige räumliche Ausrichtung der Vielzahl von Gegenständen einer gleichen Art ermöglicht. Eine solche gleichmäßige räumliche Ausrichtung einer Vielzahl von Gegenstanden ermöglicht vorteilhaft eine verbesserte Prozesseffizienz bei etwaigen nachfolgenden Prozessschritten.

In einer bevorzugten Ausführungsform erfolgt das Bestimmen der räumlichen Ausrichtung des Gegenstands (zumindest teilweise) unabhängig von einer speziell dazu vorgesehenen Kennzeichnung, Markierung und/oder Beschriftung des Gegenstands. Derartige speziell zu Ausrichtungszwecken vorgesehene Kennzeichnungen, Markierungen und/oder Beschriftungen sind beispielsweise ein- oder zweidimensionale Barcodes, Strichcodes, Matrixcodes und/oder QR-Codes, und/oder ein oder mehrere vorher festgelegte Designs und/oder Muster. Während eine solche Markierung grundsätzlich vorgesehen sein kann, hängt der beschriebene Ansatz aber vorteilhaft nicht vom Vorhandensein einer solchen Markierung ab. Insbesondere erfordert das Bestimmen der räumlichen Ausrichtung des Gegenstands in einer bevorzugten Ausführungsform keine vordefinierte Ausrichtung des Gegenstands zu einer Kamera oder zu einem Sensor, in der beispielsweise eine speziell dazu vorgesehene Kennzeichnung, Markierung und/oder Beschriftung des Gegenstands gerade in einem Blickfeld der Kamera oder des Sensors enthalten ist.

Wie beschrieben wird der Gegenstand bei herkömmlichen Verfahren so lange im Blickfeld einer Kamera oder eines Sensors bewegt, bis das oder die dedizierte(n) Merkmal(e) erkannt werden bzw. bis der Gegenstand derart ausgerichtet ist, dass das oder die Merkmale sich im Blickfeld der Kamera oder des Sensors befinden.

Dadurch, dass das Bestimmen der räumlichen Ausrichtung des Gegenstands zumindest teilweise unabhängig von der speziell dazu vorgesehenen Kennzeichnung, Markierung und/oder Beschriftung bzw. von der vordefinierten Ausrichtung erfolgt, entfällt dieses Bewegen des Gegenstands und der Transport des Gegenstands kann vorteilhaft kontinuierlich und/oder ungebremst und somit prozesseffizienter erfolgen.

In einer bevorzugten Ausführungsform ist der Gegenstand ein konturarmer Gegenstand, weist eine im Wesentlichen rotationssymmetrische Form um eine Rotationsachse auf, weist eine kreiszylindrische Form auf, und/oder ist ein Behältnis, vorzugsweise eine Dose oder ein Eimer. Ein konturarmer Gegenstand weist in einer bevorzugten Ausführungsform wenige und/oder wenig ausgeprägte Konturen auf, wobei unter Konturen vorzugsweise Kurven verstanden werden, die den Gegenstand von einem Hintergrund, vor dem sich der Gegenstand befindet, optisch abgrenzen. Dadurch, dass das Bestimmen der räumlichen Ausrichtung auf den erhaltenen Bildinformationen, und somit zumindest nicht nur auf den Konturen des Gegenstands basiert, ermöglicht ein erfindungsgemäßes Verfahren vorteilhaft eine genaue Bestimmung der räumlichen Ausrichtung auch für konturarme Gegenstände. So weist der Gegenstand beispielsweise im Wesentlichen die Form eines geraden Kreiszylinders auf und/oder besitzt eine im Wesentlichen (kreis-)runde Grundfläche. Ein solcher Gegenstand ist ein Beispiel für eine rotationssymmetrische Form und einen konturarmen Gegenstand, da die Konturen eines Kreiszylinders aus gleichmäßigen, insbesondere aus geraden und/oder gebogenen, Linien bestehen. Das Behältnis entspricht beispielsweise einem Gegenstand mit mindestens einer Außenwand und einem inneren Hohlraum. Vorzugsweise ist das Behältnis ein Gefäß und/oder ein Behälter, besonders bevorzugt ein Fass, eine Tonne, eine Dose, eine Konserve, ein Tank und/oder eine Flasche.

Wie beschrieben können erfindungsgemäß für Gegenstände mit einer Vielzahl unterschiedlicher Formen, und somit auch für die vorgenannten Behältnisse, Trainingsdaten in Form von Bildinformationen und zugehörigen räumlichen Ausrichtungen mit vergleichsweise geringem Aufwand synthetisch erzeugt werden, wodurch ein erfindungsgemäßes Verfahren flexibel für verschiedene Behältnisse verwendet werden kann.

In einer bevorzugten Ausführungsform entspricht die zu bestimmende räumliche Ausrichtung des Gegenstands einer Drehung des Gegenstands um eine Rotationsachse des Gegenstands gegenüber einem vorbestimmten Nullpunkt (oder Referenzpunkt) der Drehung. Die Rotationsachse ist dabei in einer bevorzugten Ausführungsform eine Achse, um die der Gegenstand drehbar ist. Die Drehung des Gegenstands um die Rotationsachse ist beispielsweise durch einen Parameter, vorzugsweise einen Winkel (beispielsweise in rad oder °), eindeutig festgelegt. Der Winkel, der die Drehung des Gegenstands gegenüber einem vorbestimmten und/oder zuvor definierten Nullpunkt der Drehung eindeutig festlegt, wird beispielsweise basierend auf Ausgangsdaten des auf künstlicher Intelligenz beruhenden computerimplementierten Modells mittels zumindest einer Winkelfunktion berechnet. Die Ausgangsdaten bestehen dabei etwa aus mindestens zwei, vorzugsweise aus genau zwei, Fließkommazahlen, die einen Punkt in einer Ebene definieren. Wie oben beschrieben ist es vorteilhaft, dass die zu bestimmende räumliche Ausrichtung einer Drehung des Gegenstands um eine Rotationsachse gegenüber einem vorbestimmten Nullpunkt entspricht, und vorzugsweise durch einen Winkel eindeutig festgelegt wird, da das auf künstlicher Intelligenz beruhende computerimplementierte Modell auf diese Weise nur einen unbekannten Wert (die eine Drehung bzw. den einen Winkel) bestimmen muss, wodurch eine verbesserte Genauigkeit erzielt wird.

In einer bevorzugten Ausführungsform umfasst das Manipulieren oder Steuern eines Manipulierens des Gegenstands ein Bereitstellen von Informationen über die zuvor bestimmte räumliche Ausrichtung des Gegenstands, vorzugsweise an eine Dreheinheit. So umfassen die bereitgestellten Informationen beispielsweise einen Parameter, vorzugsweise einen Winkel, der eine Drehung des Gegenstands um eine Rotationsachse gegenüber einem vorbestimmten Nullpunkt der Drehung eindeutig festlegt. In einer bevorzugten Ausführungsform umfassen die bereitgestellten Informationen zumindest einen Rückgabewert, welcher die zuvor bestimmte räumliche Ausrichtung des Gegenstands wiedergibt. Die Dreheinheit kann dabei dazu eingerichtet sein, den Gegenstand zu drehen, vorzugsweise abhängig von den bereitgestellten Informationen. Durch das Bereitstellen der Informationen, vorzugsweise an die Dreheinheit, kann vorteilhaft sichergestellt werden, dass der Gegenstand nach einer Drehung, vorzugsweise durch die Dreheinheit, eine vordefinierte und/oder gewünschte räumliche Ausrichtung aufweist.

In einer bevorzugten Ausführungsform umfasst das Verfahren weiterhin einen oder mehrere der folgenden Schritte:
- Bestimmen, vorzugsweise mittels zumindest einer Lichtschranke, dass sich der Gegenstand in einem Sichtfeld von zumindest einer Kamera befindet;
- Aufnehmen mindestens eines Bildes mittels der zumindest einen Kamera, wenn bestimmt wird, dass sich der Gegenstand in dem Sichtfeld befindet, wobei in dem mindestens einen Bild eine Darstellung des zumindest einen Teils der Oberfläche des Gegenstands enthalten ist;
- Ableiten der Bildinformationen über den zumindest einen Teil der Oberfläche des Gegenstands aus dem mindestens einen Bild;
- Bereitstellen der Bildinformationen.

Es können also in einer Ausführungsform aus einem mittels einer Kamera aufgenommenen Bild Bildinformationen über den Gegenstand abgeleitet und anschließend bereitgestellt werden, wobei die Aufnahme des Bildes mittels der Kamera durch eine Lichtschranke ausgelöst wird.

Bevorzugt ist ein Lichtstrahl der zumindest einen Lichtschranke senkrecht zu einer Richtung, in der der Gegenstand gefördert und/oder transportiert wird, und/oder parallel zu einer Auflagefläche eines Förderbands, auf dem der Gegenstand gefördert und/oder transportiert wird. Beispielsweise verläuft der Lichtstrahl ferner auf einer Höhe, die geringer ist als eine maximale Höhe des Gegenstands. Auf diese Weise wird der Lichtstrahl von dem Gegenstand unterbrochen, wenn dieser die Lichtschranke passiert, sodass die Lichtschranke den Gegenstand registrieren kann. Die Lichtschranke kann registrieren, wann sich der Gegenstand vor der Kamera befindet und/oder bestimmt, wann die zumindest eine Kamera auslösen muss, um das mindestens eine Bild des Gegenstands aufzunehmen. So kann die Lichtschranke in Reaktion auf eine Unterbrechung des Lichtstrahls ein elektrisches Signal bereitstellen und/oder ein solches weiterleiten, vorzugsweise an die zumindest eine Kamera. Durch eine Lichtschranke kann vorteilhaft sichergestellt werden, dass das mindestens eine Bild zu einem Zeitpunkt aufgenommen wird, in dem sich der Gegenstand in einem Sichtfeld der zumindest einen Kamera befindet. Auf diese Weise ermöglicht die Lichtschranke, dass nur Bilder aufgenommen werden, welche zumindest einen Teil einer Oberfläche des Gegenstands enthalten. Die Lichtschranke ermöglicht, dass nur zum Bestimmen der räumlichen Ausrichtung relevante Bilder aufgenommen werden, wodurch vorteilhaft eine benötigte Bandbreite, Speicherkapazität und/oder Rechenkapazität verringert werden kann, um die aufgenommenen Bilder und/oder Bilddaten zu übermitteln, abzuspeichern und/oder zu verarbeiten.

Das mindestens eine Bild ist insbesondere ein digitales Bild oder ein digitales Foto, und/oder die zumindest eine Kamera ist eine Digitalkamera. Die Kamera ist vorzugsweise auf eine Förderstrecke ausgerichtet, auf der der Gegenstand transportiert und/oder gefördert wird. Das heißt, das Bild wird vorzugsweise an der Förderstrecke aufgenommen, auf der der Gegenstand transportiert und/oder gefördert wird. Dass in dem mindestens einen Bild eine Darstellung des zumindest einen Teils der Oberfläche des Gegenstands enthalten ist bedeutet insbesondere, dass das mindestens eine Bild den zumindest einen Teils der Oberfläche abbildet und/oder wiedergibt. Das Ableiten der Bildinformationen umfasst in einer bevorzugten Ausführungsform ein Auslesen und/oder Berechnen von Informationen und/oder Daten, die in dem mindestens einen Bild enthalten sind und/oder die in einer zugehörigen Bilddatei gespeichert sind. Das Bereitstellen der Bildinformationen umfasst in einer bevorzugten Ausführungsform ein Übertragen der Bildinformationen von der Kamera und/oder von einer an die Kamera angeschlossenen weiteren Vorrichtung an die mindestens eine Vorrichtung.

In einer bevorzugten Ausführungsform bewegt sich der Gegenstand vor, während und/oder nach der Aufnahme des mindestens einen Bildes kontinuierlich und/oder ungebremst auf einer Fördereinrichtung. Beispielsweise bewegt sich der Gegenstand fortdauernd und/oder gleichmäßig (als Beispiele für eine kontinuierliche Bewegung), und/oder mit einer konstanten, unveränderten und/oder vordefinierten Geschwindigkeit (als Beispiele für eine ungebremste Bewegung). Beispielsweise bewegt sich der Gegenstand zumindest innerhalb eines vorbestimmten Zeitraums kontinuierlich und/oder ungebremst, wobei der vorbestimmte Zeitraum einen Zeitpunkt umfasst, in dem das mindestens eine Bild aufgenommen wird. Der Zeitraum erstreckt sich vorzugweise zumindest von einem ersten Prozessschritt bis zu einem zweiten Prozessschritt, wobei die Aufnahme des mindestens einen Bildes zwischen dem ersten und dem zweiten Prozessschritt erfolgt. Wie oben beschrieben ermöglicht ein kontinuierlicher und/oder ungebremster Transport des Gegenstands, und somit die kontinuierliche und/oder ungebremste Bewegung des Gegenstands auf der Fördereinrichtung, eine gegenüber herkömmlichen Verfahren verbesserte Prozesseffizienz.

Die Fördereinrichtung umfasst beispielsweise mindestens eine Bandförderanlage, mindestens einen Rollenförderer und/oder mindestens einen Kettenförderer, vorzugsweise ein Förderband, ein Fließband, ein Transportband, einen Bandförderer, einen Gurtbandförderer und/oder einen Gurtförderer. Ebenfalls kann die Fördereinrichtung eine Förderstrecke umfassen.

In einer bevorzugten Ausführungsform umfasst das Verfahren, vor dem Bestimmen der räumlichen Ausrichtung des Gegenstands, ferner einen oder mehrere der folgenden Schritte:
- Erzeugen eines computerimplementierten räumlichen Modells des Gegenstands basierend auf bereits vorhandenen Informationen über den Gegenstand;
- Bereitstellen einer Vielzahl synthetisch erzeugter Trainingsbilder zumindest teilweise basierend auf dem computerimplementierten räumlichen Modell des Gegenstands, wobei in jedem Trainingsbild der Vielzahl von Trainingsbildern eine basierend auf dem räumlichen Modell synthetisch erzeugte Darstellung zumindest eines Teils einer Oberfläche des Gegenstands enthalten ist;
- Bereitstellen einer Vielzahl räumlicher Ausrichtungen des Gegenstands zumindest teilweise basierend auf dem computerimplementierten räumlichen Modell des Gegenstands, wobei jedem Trainingsbild eine räumliche Ausrichtung der Vielzahl räumlicher Ausrichtungen zugeordnet ist;
- Erzeugen des auf künstlicher Intelligenz beruhenden computerimplementierten Modells zumindest basierend auf der Vielzahl synthetisch erzeugter Trainingsbilder und der Vielzahl räumlicher Ausrichtungen.

Somit umfasst das Verfahren in einer bevorzugten Ausführungsform vor der Ausrichtungsbestimmung ein Trainieren des auf künstlicher Intelligenz beruhenden computerimplementierten Modells basierend auf zuvor erzeugten Trainingsbildern sowie zugehörigen räumlichen Ausrichtungen, wobei die Trainingsbilder basierend auf einem computerimplementierten räumlichen Modell des Gegenstands synthetisch erzeugt werden.

Das räumliche Modell des Gegenstands umfasst beispielsweise ein dreidimensionales, vorzugsweise grafisches, Modell des Gegenstands. Die bereits vorhandenen Informationen über den Gegenstand können bei dem Erzeugen des räumlichen Modells des Gegenstands verwendet werden, vorzugsweise computergestützt verarbeitet.

Das Bereitstellen einer Vielzahl synthetisch erzeugter Trainingsbilder kann ein computergestütztes Erzeugen der Trainingsbilder umfassen, vorzugsweise mithilfe eines Computerprogramms. Dabei entspricht die Vielzahl synthetisch erzeugter Trainingsbilder in einem Beispiel mindestens 1000, vorzugsweise mindestens 10.000, besonders bevorzugt etwa 50.000, synthetisch erzeugten Trainingsbildern. Dabei belegt die Vielzahl synthetisch erzeugter Trainingsbilder insgesamt beispielsweise zwischen 100 MB (100 Megabyte) und 10 GB (10 Gigabyte), vorzugsweise etwa 1 GB, Speicherplatz. Wie oben bereits erwähnt, ermöglicht das synthetische Erzeugen der Trainingsbilder vorteilhaft, dass auch eine große Zahl an Trainingsbildern mit vergleichsweise geringem Aufwand erzeugt werden kann. Die Trainingsbilder sind zweidimensionale digitale Bilder, die vorzugsweise mittels einer Kamera aufgenommenen Bildern des Gegenstands ähneln und/oder diese nachbilden. So können die Trainingsbilder beispielsweise eine Vielzahl unterschiedlicher räumlicher Ausrichtungen, Hintergründe, Lichtverhältnisse, Bilddefekte und/oder Kamerapositionen und/oder -positionierungen enthalten. Dabei umfassen die Lichtverhältnisse in einer bevorzugten Ausführungsform eine Über- und/oder Unterbelichtung des Gegenstands und die Bilddefekte umfassen in einer bevorzugten Ausführungsform eine mangelnde Bildschärfe und/oder eine Bildunschärfe. Durch das Erzeugen bzw. Trainieren des auf künstlicher Intelligenz beruhenden computerimplementierten Modells mit Trainingsbildern mit unterschiedlichen äußeren Bedingungen (wie Hintergründen, Lichtverhältnissen und/oder Kamerapositionen) ist die durch das Modell erlernte Abbildung zwischen den Bildinformationen und den räumlichen Ausrichtungen vergleichsweise unempfindlich gegenüber einer Variation der äußeren Bedingungen und bietet somit eine verbesserte Robustheit bzw. Zuverlässigkeit.

Beispielsweise bildet das Trainingsbild den zumindest einen Teil der Oberfläche synthetisch ab, nach und/oder gibt diesen wieder. Das Bereitstellen der Vielzahl räumlicher Ausrichtungen des Gegenstands zumindest teilweise basierend auf dem räumlichen Modell des Gegenstands umfasst insbesondere ein Auslesen und/oder Abrufen der räumlichen Ausrichtungen aus dem räumlichen Modell des Gegenstands. Das Bereitstellen der Vielzahl räumlicher Ausrichtungen erfolgt daher insbesondere ohne ein, beispielsweise manuelles, Ermitteln der räumlichen Ausrichtungen mittels einer Messapparatur und/oder eines Messvorgangs. Auf diese Weise entfällt vorteilhaft sowohl ein Aufnehmen realer Bilder des Gegenstands als auch ein zugehöriges Vermessen zugehöriger Ausrichtungen des Gegenstands, wodurch ein deutlich verringerter Zeitaufwand für das Erzeugen des auf künstlicher Intelligenz beruhenden computerimplementierten Modells erforderlich ist, was wiederum eine hohe Flexibilität hinsichtlich unterschiedlicher Gegenstände ermöglicht.

Dass jedem Trainingsbild eine räumliche Ausrichtung der Vielzahl räumlicher Ausrichtungen zugeordnet ist, bedeutet in einer bevorzugten Ausführungsform, dass jedes Trainingsbild mit einer räumlichen Ausrichtung des Gegenstands in dem Trainingsbild assoziiert ist. Diese Zuordnung bzw. Assoziation ermöglicht vorteilhaft das Erzeugen des auf künstlicher Intelligenz beruhenden computerimplementierten Modells durch ein Trainieren des Modells, insbesondere mit einem überwachten Lernverfahren.

So umfasst das Erzeugen des auf künstlicher Intelligenz beruhenden computerimplementierten Modells zumindest basierend auf der Vielzahl synthetisch erzeugter Trainingsbilder und der Vielzahl räumlicher Ausrichtungen insbesondere ein, vorzugsweise überwachtes, maschinelles Lernverfahren, wobei das maschinelle Lernverfahren vorzugsweise ein Trainieren des Modells mit den Trainingsbildern als Trainings-Eingangsdaten und den räumlichen Ausrichtungen als (bekannten) Trainings-Ausgangsdaten umfasst. Zwar kann das Modell grundsätzlich auch basierend auf realen Trainingsbildern und den realen Trainingsbildern zugeordneten, bekannten räumlichen Ausrichtungen erzeugt werden. Das Modell wird aber vorzugsweise ausschließlich basierend auf den synthetisch erzeugten Trainingsbildern und den zugeordneten räumlichen Ausrichtungen erzeugt.

In einer bevorzugten Ausführungsform umfassen die bereits vorhandenen Informationen über den Gegenstand zumindest die folgenden Informationen:
- erste Informationen, vorzugsweise in zwei räumlichen Dimensionen, über ein(en) an und/oder auf dem Gegenstand angebrachte Beschriftung, Etikett und/oder Aufkleber, und
- zweite Informationen, vorzugsweise in drei räumlichen Dimensionen, über eine geometrische Form des Gegenstands;
- wobei das Erzeugen des computerimplementierten räumlichen Modells des Gegenstands sowohl auf den ersten Informationen als auch auf den zweiten Informationen basiert.

Das computerimplementierte räumliche Modell des Gegenstands kann damit in einer bevorzugten Ausführungsformbasierend auf einer bzw. einem auf dem Gegenstand angebrachten Beschriftung/Etikett/Aufkleber und basierend auf der geometrischen Form des Gegenstands erzeugt werden.

Die ersten Informationen sind beispielsweise in zumindest einer ersten Computerdatei enthalten, in der die, das oder der auf dem Gegenstand angebrachte(n) Beschriftung, Etikett und/oder Aufkleber als eine oder mehrere Bild- und/oder Textdatei (etwa ein Word-, JPG-, JPEG-, PNG-, GIF-, TIFF- oder PDF-Format) enthalten ist. Die zweiten Informationen sind zum Beispiel in zumindest einer zweiten Computerdatei (etwa ein Format, das von Computerprogrammen zur rechnergestützten Konstruktion ("*computer-aided design*"; CAD) verwendet wird, wie das *Drawing Interchange File Format* (DXF-Format) oder das DWG-Format) enthalten.

Das Erzeugen des räumlichen Modells des Gegenstands basierend sowohl auf den ersten Informationen als auch auf den zweiten Informationen kann eine computergestützte Simulation der Beschriftung, des Etiketts und/oder des Aufklebers auf der Oberfläche des Gegenstands umfassen, wobei die Simulation die geometrische Form des Gegenstands, beispielsweise eine Krümmung und/oder Neigung der Oberfläche des Gegenstands, berücksichtigt.

Dadurch, dass das computerimplementierte räumliche Modell des Gegenstands sowohl basierend auf der Beschriftung, dem Etikett und/oder dem Aufkleber als auch basierend auf einer geometrischen Form des Gegenstands erzeugt wird, fließen sowohl Informationen, die von der Beschriftung, dem Etikett und/oder dem Aufkleber umfasst sind, als auch Informationen über die geometrische Form des Gegenstands in die basierend auf dem räumlichen Modell des Gegenstands erzeugten Trainingsbilder ein. Die so erzeugten Trainingsbilder können dann wiederum von dem auf künstlicher Intelligenz beruhenden computerimplementierten Modell vorteilhaft verwendet werden, um die (nichtlineare) Abbildung zwischen den Bildinformationen und den räumlichen Ausrichtungen zu erlernen.

Wie oben beschrieben ist dies insbesondere deshalb vorteilhaft, da sowohl die Informationen zu der Beschriftung, dem Etikett bzw. dem Aufkleber als auch die Informationen zur geometrischen Form des Gegenstands ohnehin vorhanden sind. Somit ermöglichen diese Informationen mit geringem Aufwand eine genaue Abbildung zwischen den Bildinformationen und den räumlichen Ausrichtungen und somit eine präzise Bestimmung der räumlichen Ausrichtung.

In einer bevorzugten Ausführungsform umfasst das Manipulieren des Gegenstands einen oder mehrere der folgenden Schritte:
- räumliches Ausrichten des Gegenstands;
- Drehen des Gegenstands;
- Kippen des Gegenstands;
- Ausrichten einer/s auf den Gegenstand anzubringenden Beschriftung, Etiketts und/oder Aufklebers; und/oder
- Aufbringen einer Beschriftung, eines Etiketts und/oder eines Aufklebers auf den Gegenstand.

Der Gegenstand wird beispielsweise derart gedreht, dass der Gegenstand nach der Drehung keine Drehung gegenüber einem vorbestimmten Nullpunkt der Drehung mehr aufweist. Der Gegenstand wird zum Beispiel derart gedreht, dass er nach der Drehung eine räumliche Sollausrichtung aufweist. So erfolgt eine Drehung beispielsweise derart, dass sie einen vorbestimmten Verarbeitungs- und/oder Prozessschritt ermöglicht, der zeitlich und/oder räumlich auf den Schritt des Manipulierens des Gegenstands folgt.

Das Ausrichten einer/s auf den Gegenstand anzubringenden (zweiten) Beschriftung, Etiketts und/oder Aufklebers kann zum Beispiel eine horizontale Ausrichtung, eine vertikale Ausrichtung und/oder eine Ausrichtung in einer Tiefe umfassen. In einer bevorzugten Ausführungsform umfasst und/oder entspricht das Aufbringen ein(em) Aufkleben.

Beispielsweise wird (zusätzlich zur/m oben beschriebenen ersten Etikett/Aufkleber) ein zweites Etikett oder ein zweiter Aufkleber auf den Gegenstand aufgebracht, im Falle einer zylinderförmigen Dose beispielsweise ein Aufbringen eines Etiketts oder Aufklebers auf eine Grundfläche des Zylinders (etwa den Deckel der Dose). Das zweite Etikett bzw. der zweite Aufkleber kann dann mit einer gewünschten Orientierung (etwa oberseitig auf dem Deckel) zum ersten Etikett/Aufkleber (etwa auf der Mantelfläche) aufgebracht werden.

Durch eine der obigen Vorgehensweisen kann vorteilhaft sichergestellt werden, dass der Gegenstand nach dem Manipulieren eine vordefinierte und/oder gewünschte räumliche Ausrichtung aufweist, und/oder, dass ein(e) auf den Gegenstand anzubringende(r) Beschriftung, Etikett und/oder Aufkleber eine vordefinierte und/oder gewünschte horizontale und/oder vertikale Ausrichtung auf dem Gegenstand aufweist.

Die vorgenannte(n) Aufgabe(n) werden ferner durch die weiteren Aspekte der vorliegenden Erfindung gelöst.

Ein zweiter Aspekt der vorliegenden Erfindung betrifft eine Vorrichtung, welche dazu eingerichtet ist oder Mittel umfasst, ein Verfahren gemäß dem ersten Aspekt durchzuführen und/oder zu steuern.

Ein dritter Aspekt der vorliegenden Erfindung betrifft ein System, welches dazu eingerichtet ist oder Mittel umfasst, ein Verfahren gemäß dem ersten Aspekt durchzuführen und/oder zu steuern.

Ein Steuern des Verfahrens umfasst beispielsweise ein Steuern mindestens einer weiteren Vorrichtung und/oder eines weiteren Systems, welche(s) das Verfahren unmittelbar durchführt. Das System ist etwa ein Ausrichtungserkennungssystem für konturarme Gegenstände, welches dazu geeignet ist eine Ausrichtung konturarmer Gegenstände zu erkennen.

Die Mittel umfassen zum Beispiel einen Computer, eine Kamera, eine Lichtschranke, eine Dreheinheit, einen Bildschirm, und/oder ein computerlesbares Medium. Der Bildschirm ist zum Beispiel dazu eingerichtet, eine Information über die zuvor bestimmte räumliche Ausrichtung des Gegenstands und/oder über eine vorgeschlagene, geplante und/oder durchgeführte Manipulation des Gegenstands wiederzugeben, sie vorzugsweise einem Benutzer anzuzeigen. Alternativ oder zusätzlich ist der Bildschirm in einer bevorzugten Ausführungsform dazu eingerichtet, Eingaben und/oder Befehle eines Benutzers, vorzugsweise zur Durchführung und/oder Steuerung des Verfahrens gemäß dem ersten Aspekt, zu erhalten. Das System besteht zum Beispiel aus einem Computer und einer Kamera. Ein solches System ist insbesondere kompakt genug, um an einer Förderstrecke installiert zu werden, auf der der Gegenstand transportiert und/oder gefördert wird, sodass an der Förderstrecke vorteilhaft die oben beschriebenen technischen Effekte und Vorteile erzielt werden können.

Alternativ oder zusätzlich umfasst das System in einer bevorzugten Ausführungsform eine oder mehrere Servervorrichtungen. In einer bevorzugten Ausführungsform werden ein oder mehrere Schritte des Verfahrens gemäß dem ersten Aspekt von der einen oder den mehreren Servervorrichtungen durchgeführt. Besonders bevorzugt werden zumindest die Schritte des synthetischen Erzeugens der Trainingsbilder und/oder des Trainierens des auf künstlicher Intelligenz beruhenden computerimplementierten Modells von der einen oder den mehreren Servervorrichtungen durchgeführt. Durch eine solche Auslagerung der rechenleistungsintensiven Schritte des Verfahrens auf den einen oder die mehreren Server muss ein für die weniger rechenleistungsintensiven Schritte des Verfahrens (z.B. für den Schritt des Bestimmens der räumlichen Ausrichtung des Gegenstands) verwendeter Computer vorteilhaft nur eine vergleichsweise geringe Rechenleistung aufweisen.

Ein vierter Aspekt der vorliegenden Erfindung betrifft ein Computerprogramm, umfassend Befehle, die einen Prozessor zur Ausführung und/oder Steuerung eines Verfahrens gemäß dem ersten Aspekt veranlassen, wenn das Computerprogramm auf dem Prozessor ausgeführt wird.

In einer bevorzugten Ausführungsform umfasst das Computerprogramm:
- eine Software zur Erstellung eines 3D-Modells des Gegenstands aus einer 2D-Grafik;
- eine Software zur Erzeugung von synthetischen 2 D-Bildern des Gegenstands mit unterschiedlicher Ausrichtung, Belichtung und/oder Bilddefekten, wobei die 2D-Bilder eine Grundlage eines Trainierens des auf künstlicher Intelligenz beruhenden computerimplementierten Modells sind; und/oder
- das auf künstlicher Intelligenz beruhende computerimplementierte Modell.

Ein fünfter Aspekt der vorliegenden Erfindung betrifft ein computerlesbares Medium, auf dem das Computerprogramm gemäß dem vierten Aspekt gespeichert ist.

Das computerlesbare Medium gemäß dem dritten Aspekt und/oder gemäß dem fünften Aspekt umfasst beispielsweise einen flüchtigen oder nicht-flüchtigen Speicher, beispielsweise einen Random-Access-Memory (RAM), einen Read-Only-Memory (ROM), eine Diskette, eine CD, eine DVD, eine Festplatte und/oder einen Flash-Speicher. In einer besonders bevorzugten Ausführungsform umfasst das computerlesbare Medium einen USB-Speicherstick.

In einer bevorzugten Ausführungsform ist auf dem computerlesbaren Medium das auf künstlicher Intelligenz beruhende computerimplementierte Modell, das computerimplementierte räumliche Modell des Gegenstands und/oder eine Datei, vorzugsweise eine PDF-Datei, in der eine Darstellung der Beschriftung, des Etiketts und/oder des Aufkleber enthalten ist, gespeichert.

Ein weiterer Aspekt der vorliegenden Erfindung betrifft eine Verwendung eines Verfahrens, einer Vorrichtung, eines Systems, eines Computerprogramms und/oder eines computerlesbaren Mediums gemäß einem der vorgenannten Aspekte zum Manipulieren eines Gegenstands, vorzugsweise in einer Produktionsstätte und/oder in einem Produktionsprozess.

Die zuvor in dieser Beschreibung beschriebenen bevorzugten Ausführungsformen sollen auch als in allen Kombinationen miteinander offenbart verstanden werden. Insbesondere sollen bevorzugte Ausführungsformen als in Bezug auf die unterschiedlichen Aspekte offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung oder eines Systems offenbart sein. Ebenfalls soll durch die Offenbarung von Mitteln einer Vorrichtung oder eines Systems zur Durchführung eines Verfahrensschrittes auch der entsprechende Verfahrensschritt offenbart sein.

Weitere vorteilhafte bevorzugte Ausführungsformen sind der folgenden detaillierten Beschreibung einiger bevorzugter Ausführungsformen, insbesondere in Verbindung mit den Figuren, zu entnehmen. Die Figuren sollen jedoch nur dem Zwecke der Verdeutlichung, nicht aber zur Bestimmung des Schutzbereiches dienen. Die Figuren sind nicht maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

### Kurze Beschreibung der Figuren

Nachfolgend wird die Erfindung anhand einiger Zeichnungen näher erläutert.
- Fig. 1: zeigt eine perspektivische Darstellung eines Ausführungsbeispiels eines Systems gemäß einem beispielhaften Aspekt der Erfindung;
- Fig. 2: zeigt ein Blockdiagramm eines weiteren Ausführungsbeispiels eines Systems gemäß einem beispielhaften Aspekt der Erfindung;
- Fig. 3: zeigt ein Flussdiagramm eines Ausführungsbeispiels eines Verfahrens gemäß einem beispielhaften Aspekt der Erfindung;
- Fig. 4: zeigt ein Flussdiagramm umfassend einige optionale Schritte eines Verfahrens gemäß einem beispielhaften Aspekt der Erfindung; und
- Fig. 5: zeigt ein Flussdiagramm umfassend ein spezifisches Ausführungsbeispiel einiger der optionalen Schritte in Fig. 4.

### Detaillierte Beschreibung einiger bevorzugter Ausführungsformen

Die erfindungsgemäßen Aspekte werden im Folgenden insbesondere anhand eines Beispiels einer auf einem Förderband bewegten Dose beschrieben, welche ein auf der Mantelfläche aufgebrachtes Etikett aufweist, welches durch die Bildinformationen aufgenommen wird, sodass die Ausrichtung bestimmt werden kann, um sodann oberseitig ein Etikett mit der gewünschten Orientierung aufzubringen. Allerdings kann das im Folgenden beschriebene Ausführungsbeispiel gleichermaßen auch für andere Gegenstände und/oder Zwecke einsetzbar sein.

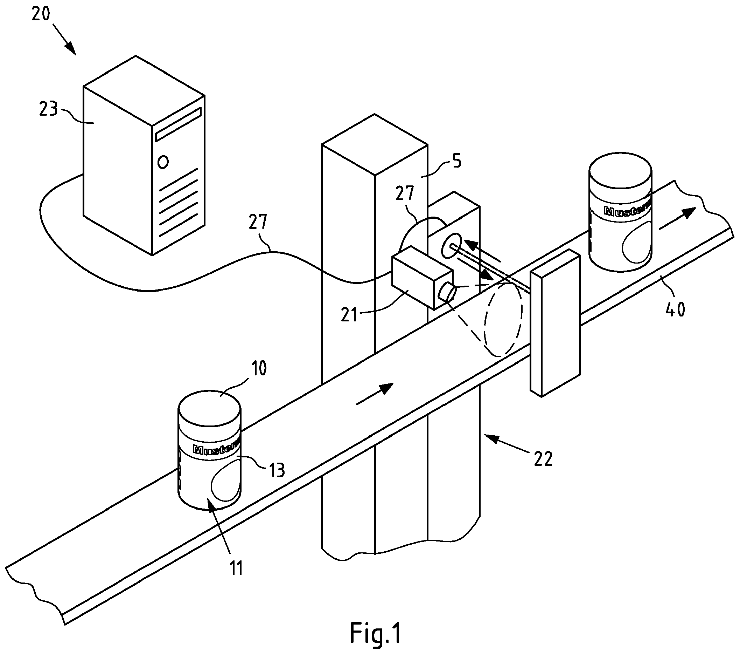

Fig. 1 zeigt eine perspektivische Darstellung eines Ausführungsbeispiels eines Systems gemäß einem beispielhaften Aspekt der Erfindung. Das in Fig. 1 gezeigte System 20 befindet sich an einem Förderband 40, auf dem sich eine auszurichtende Dose 10 befindet, welche von dem Förderband 40 in Pfeilrichtung transportiert wird. Auf einer Oberfläche 11 (hier die Mantelfläche) der Dose 10 ist ein (erstes) Etikett 13 angebracht, welches die Mantelfläche der Dose 11 im Wesentlichen umlaufend und über die gesamte Höhe abdeckt.

Das System 20 besteht aus einer Kamera 21 (hier Basler ace acA2040-25gc GigE), einer Lichtschranke 22, einem Computer 23 und einer jeweiligen Kabelverbindung 27 zwischen der Kamera 21 und dem Computer 23 sowie zwischen der Kamera 21 und der Lichtschranke 22. Die Kabelverbindungen 27 dienen der Signalweiterleitung von der Lichtschranke 22 an die Kamera 21 bzw. von der Kamera 21 an den Computer 23. Alternativ oder zusätzlich sind auch kabellose Verbindungen, beispielsweise Wireless Local Area Network (WLAN) Verbindungen, Wireless Personal Area Network (WPAN) Verbindungen und/oder Mobilfunk-Verbindungen, zwischen Kamera 21, Computer 23 und/oder Lichtschranke 22 möglich.

Die Lichtschranke 22 (oder ein entsprechender anderer Sensor) befindet sich in Transportrichtung des Förderbands 40 hinter der Kamera 21, sodass ein Gegenstand, der auf dem Förderband 40 transportiert wird, zuerst die Kamera 21 und danach die Lichtschranke 22 passiert. Die Kamera 21 ist an einer Halterung 5 (optional ebenfalls Teil des Systems) befestigt und auf das Förderband 40 ausgerichtet. Ein Sichtfeld der Kamera 21 ist also derart eingestellt, dass Gegenstände, die auf dem Förderband 40 transportiert werden, sich während des Transports zumindest teilweise durch das Sichtfeld der Kamera 21 bewegen. Grundsätzlich sind auch andere räumliche Anordnungen von Kamera und Lichtschranke bzw. Sensor möglich, solange diese derart aufeinander abgestimmt sind, dass der Sensor die Kamera so auslöst, dass diese die Gegenstände erfasst.

Im Folgenden werden einige Schritte eines Ausführungsbeispiels eines erfindungsgemäßen Verfahrens anhand von Fig. 1 näher erläutert:
Während des Transports auf dem Förderband 40 passiert die Dose 10 die Lichtschranke 22. Aufgrund der Unterbrechung des Lichtstrahls von Lichtschranke 22 (in Fig. 1 als zwei entgegenlaufende Pfeile dargestellt) durch die Dose 10 während der Passage der Dose 10 durch die Lichtschranke 22 detektiert die Lichtschranke 22 die Dose 10. Basierend auf der bekannten Anordnung der Lichtschranke 22 und der Kamera 21 entlang des Förderbands 40 (die Lichtschranke befindet sich in Transportrichtung des Förderbands 40 hinter der Kamera 21) wird in einer bevorzugten Ausführungsform basierend auf einem Zeitpunkt der Detektion der Dose 10 an der Lichtschranke 22 bestimmt, dass die Dose 10 sich in dem Sichtfeld der Kamera 21 (in Fig. 1 als zwei gestrichelte Linien dargestellt) befindet (ein Beispiel für das Bestimmen, mittels zumindest einer Lichtschranke, dass sich der Gegenstand in einem Sichtfeld von zumindest einer Kamera befindet). Alternativ kann die Lichtschranke 22 (oder ein entsprechender anderer Sensor) auch in Transportrichtung des Förderbands 40 vor der Kamera 21 positioniert werden, sodass ein Gegenstand, der auf dem Förderband 40 transportiert wird, zuerst die Lichtschranke 22 und danach die Kamera 21 passiert. In diesem Fall wird die Kamera 21 mit einer Verzögerungszeit ausgelöst, welche zumindest basierend auf einem bekannten Abstand zwischen der Lichtschranke 22 und der Kamera 21, bekannten Abmessungen der Dose 10, und/oder einer bekannten Transportgeschwindigkeit der Dose 10 auf dem Förderband 40 bestimmt wird, und sicherstellt, dass die Dose 10 zu dem Zeitpunkt des Auslösens (optimal) vor der Kamera 21 positioniert ist.

Mit anderen Worten sendet die Lichtschranke 22 in Reaktion auf die Detektion der Dose 10 ein Signal an die Kamera 21, welche daraufhin zu dem Zeitpunkt, in dem sich die Dose 10 in optimaler Weise in dem Sichtfeld der Kamera 21 befindet, auslöst und ein Digitalbild der Dose 10 aufnimmt (ein Beispiel für das Aufnehmen mindestens eines Bildes mittels der zumindest einen Kamera, wenn bestimmt wird, dass sich der Gegenstand in dem Sichtfeld der zumindest einen Kamera befindet).

Das Digitalbild enthält dabei eine Abbildung der Oberfläche 11, insbesondere des Etiketts 13 (ein Beispiel dafür, dass in dem mindestens einen Bild eine Darstellung des zumindest einen Teils der Oberfläche des Gegenstands enthalten ist).

Anschließend sendet die Kamera 21 das aufgenommene Digitalbild der Dose 10 einschließlich der Abbildung der Oberfläche 11 und des Etiketts 13 über die Kabelverbindung 27 an den Computer 23 (ein Beispiel für das Bereitstellen der Bildinformationen).

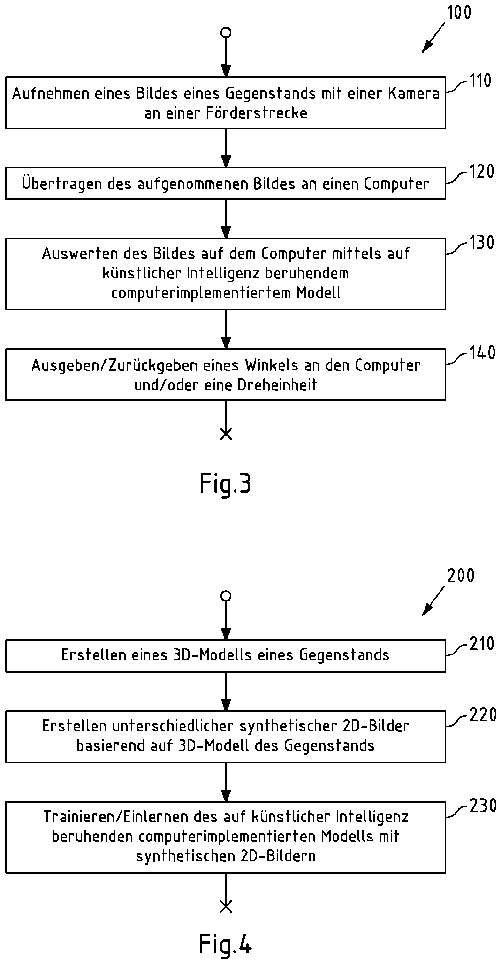

Weitere, nach dem Bereitstellen der Bildinformationen durchgeführte Schritte eines Ausführungsbeispiels eines erfindungsgemäßen Verfahrens werden weiter unten mit Bezug auf die Fig. 3 und 4 erläutert.

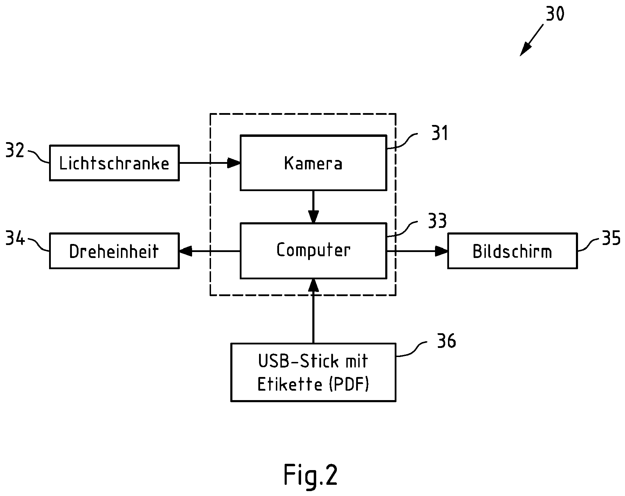

Fig. 2 zeigt zunächst ein Blockdiagramm eines weiteren Ausführungsbeispiels eines Systems gemäß einem beispielhaften Aspekt der Erfindung. Bevorzugt besteht das System 30 aus einer Kamera 31 und einem Computer 33 (siehe gestrichelter Kasten). Ein solches System ist besonders kompakt und ermöglicht daher vorteilhaft eine Installation an einer Förderstrecke auch bei schwierigen Platzverhältnissen.

Optional umfasst das System 30 ferner eine Lichtschranke 32, eine Dreheinheit 34, einen Bildschirm 35 und/oder einen USB-Stick 36 (weitere Beispiele für die mindestens eine Vorrichtung). Dabei sind die Lichtschranke 32 mit der Kamera 31 und die Kamera 31 mit dem Computer 33 verbunden. Der Computer 33 ist mit der Dreheinheit 34, dem Bildschirm 35 und dem USB-Stick 36 verbunden. Die verschiedenen Teile des Systems 30 können dabei wie oben beschrieben entweder mit Kabeln oder kabellos miteinander verbunden sein.

Die Dreheinheit 34 ist in einer bevorzugten Ausführungsform wie oben bereits erläutert dazu eingerichtet, den Gegenstand in einer gewünschten Weise zu drehen. Beispielsweise ist die Dreheinheit 34 dazu eingerichtet, den Gegenstand derart zu drehen, dass er nach der Drehung durch die Dreheinheit keine Drehung gegenüber einem vorbestimmten Nullpunkt der Drehung mehr aufweist. Dazu kann die Dreheinheit 34 beispielsweise an, neben, auf, oder über einer Förderstrecke angeordnet und/oder ein Teil der Förderstrecke sein. Alternativ kann die Dreheinheit 34 auch erst in einem Prozessschritt, der nach dem Transport auf der Förderstrecke durchgeführt wird, eingesetzt werden.

Der Bildschirm 35 ist in einer bevorzugten Ausführungsform wie oben bereits erläutert dazu eingerichtet, eine Information über die zuvor bestimmte räumliche Ausrichtung des Gegenstands und/oder über eine vorgeschlagene, geplante und/oder durchgeführte Manipulation des Gegenstands wiederzugeben, sie vorzugsweise einem Benutzer anzuzeigen. Wie ebenfalls bereits oben erläutert, ist der Bildschirm (beispielsweise ein Touchscreen) alternativ oder zusätzlich dazu eingerichtet, Eingaben und/oder Befehle eines Benutzers zur Durchführung und/oder Steuerung des Verfahrens gemäß dem ersten Aspekt zu erhalten. Insbesondere kann der Benutzer beispielsweise den Rendering-Algorithmus starten, die Erstellung eines (neuen) KI-Modells starten und/oder auch den zu erkennenden Typ des Gegenstands (etwa den zu erkennenden Dosentyp) eingeben. Beispielsweise ist der Bildschirm 35 dazu ebenfalls an, neben, oder über der Förderstrecke angeordnet, sodass ein Benutzer, der einen oder mehrere Prozessschritte an der Förderstrecke überwacht, den Bildschirm 35 vorteilhaft einsehen und/oder bedienen kann.

Auf dem USB-Stick 36 sind wie oben bereits erläutert in einer bevorzugten Ausführungsform das auf künstlicher Intelligenz beruhende computerimplementierte Modell, das computerimplementierte räumliche Modell des Gegenstands und/oder eine Datei, in der eine Darstellung der Beschriftung, des Etiketts und/oder des Aufklebers enthalten ist, gespeichert. Dies ermöglicht, dass der Computer 33 über die Verbindung zwischen dem Computer 33 und dem USB-Stick 36 auf diese Informationen zugreifen kann.

Fig. 3 zeigt ein Flussdiagramm eines Ausführungsbeispiels eines Verfahrens gemäß einem beispielhaften Aspekt der Erfindung.

In den Schritten 110 und 120 wird zunächst ein Bild eines Gegenstands mit einer Kamera an einer Förderstrecke aufgenommen und anschließend an einen Computer übertragen. Die Bildaufnahme (Schritt 110) und/oder die Bildübertragung (Schritt 120) erfolgen dabei beispielsweise wie oben anhand von Fig. 1 bereits näher erläutert (Aufnehmen eines Digitalbilds durch die Kamera 21; Senden des aufgenommenen Digitalbilds durch die Kamera 21 über die Kabelverbindung 27 an den Computer 23).

In Schritt 130 wird das Bild dann auf dem Computer mittels des auf künstlicher Intelligenz beruhenden computerimplementierten Modells ausgewertet. Dabei kann das Auswerten beispielsweise so verstanden werden, dass aus dem übertragenen Bild abgeleitete Bildinformationen als Eingangsdaten an das zuvor trainierte, auf künstlicher Intelligenz beruhende computerimplementierte Modell übergeben werden und von diesem daraufhin ein Winkel des Gegenstands gegenüber einem vorher definierten Nullpunkt als Ausgangsdatum bestimmt wird, was ein Beispiel für das Bestimmen der räumlichen Ausrichtung des Gegenstands zumindest teilweise basierend auf den erhaltenen Bildinformationen mittels eines auf künstlicher Intelligenz beruhenden computerimplementierten Modells darstellt.

In Schritt 140 wird der zuvor bestimmte Winkel dann an einen Computer, beispielsweise an den Computer 23, 33, und/oder an eine Dreheinheit, beispielsweise an Dreheinheit 34, aus- bzw. zurückgegeben, was ein Beispiel für das Bereitstellen von Informationen über die zuvor bestimmte räumliche Ausrichtung des Gegenstands darstellt.

Im Anschluss an Schritt 140 (in Fig. 3 nicht gezeigt) wird der Gegenstand in einer bevorzugten Ausführungsform dann durch eine Dreheinheit in einer gewünschten Weise gedreht. In einer besonders bevorzugten Ausführungsform wird der Gegenstand derart positioniert und/oder ausgerichtet, dass ein Verarbeitungs- und/oder Prozessschritt, der zeitlich und/oder räumlich auf den Schritt 140 sowie auf einen Schritt des Drehens durch die Dreheinheit folgt, ermöglicht wird.

Fig. 4 zeigt ein Flussdiagramm umfassend einige optionale Schritte eines Verfahrens gemäß einem beispielhaften Aspekt der Erfindung.

In Schritt 210 wird ein 3D-Modell eines Gegenstands erstellt (ein Beispiel für das Erzeugen eines computerimplementierten räumlichen Modells des Gegenstands). Bezugnehmend auf das in Fig. 1 gezeigte Beispiel basiert das 3D-Modell des Gegenstands beispielsweise auf der kreiszylindrischen Form von Dose 10 (ein Beispiel für Informationen in drei räumlichen Dimensionen über eine geometrische Form des Gegenstands) und dem, beispielsweise im PDF-Format vorliegenden, Etikett 13 (ein Beispiel für Informationen in zwei räumlichen Dimensionen über ein(en) an und/oder auf dem Gegenstand angebrachte Beschriftung, Etikett und/oder Aufkleber).

In Schritt 220 werden basierend auf dem 3D-Modell des Gegenstands unterschiedliche synthetische 2D-Bilder erstellt (ein Beispiel für das Bereitstellen einer Vielzahl synthetisch erzeugter Trainingsbilder zumindest teilweise basierend auf dem computerimplementierten räumlichen Modell des Gegenstands). Dazu werden beispielsweise, ausgehend von dem 3D-Modell des Gegenstands, synthetische Bilder mit unterschiedlichen synthetisierten Hintergründen und Belichtungen erstellt.

In Schritt 230 wird das auf künstlicher Intelligenz beruhende computerimplementierte Modell dann mit den synthetischen 2D-Bildern trainiert bzw. eingelernt (ein Beispiel für das Erzeugen des auf künstlicher Intelligenz beruhenden computerimplementierten Modells). Für das Trainieren bzw. Einlernen des Modells wird in einer bevorzugten Ausführungsform neben den synthetisch erstellten 2D-Bildern auch eine jeweilige vorbekannte räumliche Ausrichtung des Gegenstands, die der Gegenstand in dem jeweiligen synthetisch erstellten 2D-Bild aufweist, bereitgestellt (ein Beispiel für das Bereitstellen einer Vielzahl räumlicher Ausrichtungen des Gegenstands, wobei einem jeweiligen Trainingsbild eine räumliche Ausrichtung der Vielzahl räumlicher Ausrichtungen zugeordnet ist).

Im Anschluss an Schritt 230 wird das trainierte bzw. eingelernte Modell in einer bevorzugten Ausführungsform für den Schritt des Auswertens des Bildes auf dem Computer (Schritt 130) eingesetzt (in Fig. 4 nicht gezeigt). In einer bevorzugten Ausführungsform werden die Schritte des in Fig. 4 gezeigten Verfahrens 200 daher vor Schritt 130, vorzugsweise vor allen Schritten des Verfahrens 100, durchgeführt.

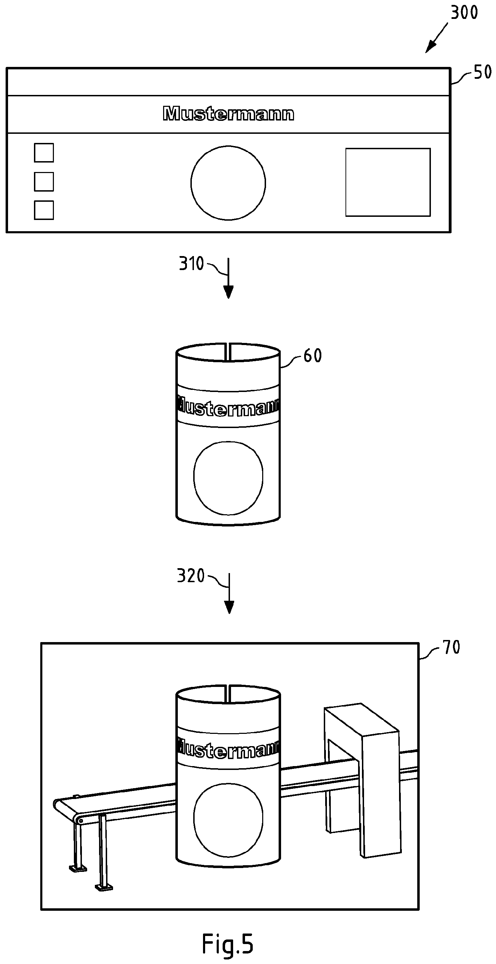

Fig. 5 zeigt ein Flussdiagramm umfassend ein spezifisches Ausführungsbeispiel einiger der optionalen Schritte in Fig. 4.

In Schritt 310 wird das, beispielsweise im PDF-Format vorliegende, 2D-Etikett 50 unter Beachtung der Form einer Dose, auf der das 2D-Etikett 50 angebracht werden soll, gerendert. In einer bevorzugten Ausführungsform umfasst Schritt 310 das Erstellen eines 3D-Modells der Dose mit dem aufgebrachten 2D-Etikett 50 (vgl. Schritt 210). Als Ergebnis des Renderns wird ein gerendertes Bild 60 des 2D-Etiketts 50 erhalten, welches sowohl auf in dem 2D-Etikett 50 enthaltenen Informationen (ein Beispiel für die ersten Informationen) als auch auf in der Form der Dose enthaltenen Informationen (ein Beispiel für die zweiten Informationen) beruht.

In Schritt 320 wird basierend auf dem gerenderten Bild 60 des 2D-Etiketts 50 ein synthetisch erzeugtes Bild 70 erzeugt (vgl. Schritt 220). In dem synthetisch erzeugten Bild 70 befindet sich das gerenderte Bild 60 vor einem typischen Hintergrund, beispielsweise einer Förderstrecke, welche sich in einer Produktionsstätte befindet. Wie oben bereits beschrieben werden für das Erzeugen von synthetisch erzeugten Bildern in einer bevorzugten Ausführungsform unterschiedliche Hintergründe und/oder Belichtungen verwendet.

In einer bevorzugten Ausführungsform wird eine Vielzahl synthetisch erzeugter 2D-Bilder 70 verwendet, um das auf künstlicher Intelligenz beruhende computerimplementierte Modell zu trainieren bzw. einzulernen (vgl. Schritt 230).

Die Erfindung ist nicht auf in den Fig. 1 bis 5 dargestellte Ausführungsformen beschränkt. Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 5: Halterung
- 10: Dose
- 11: Oberfläche der Dose
- 13: Etikett
- 20,30: System
- 21, 31: Kamera
- 22, 32: Lichtschranke
- 23,33: Computer
- 27: Kabelverbindung
- 34: Dreheinheit
- 35: Bildschirm
- 36: USB-Stick
- 40: Förderband
- 50: 2D-Etikett
- 60: Gerendertes Bild
- 70: Synthetisch erzeugtes Bild
- 100: Beispielhaftes Verfahren (umfassend Schritte 110, 120, 130, 140)
- 200: Einige optionale Schritte des beispielhaften Verfahrens (umfassend Schritte 210, 220, 230)
- 300: Spezifisches Ausführungsbeispiel einiger der optionalen Schritte (umfassend Schritte 310, 320)

## Patentansprüche

1. Verfahren zur Bestimmung einer räumlichen Ausrichtung eines zu manipulierenden Gegenstands, durchgeführt von mindestens einer Vorrichtung, das Verfahren umfassend:
- Erhalten von Bildinformationen über zumindest einen Teil einer Oberfläche des Gegenstands;
- Bestimmen der räumlichen Ausrichtung des Gegenstands zumindest teilweise basierend auf den erhaltenen Bildinformationen mittels eines auf künstlicher Intelligenz beruhenden computerimplementierten Modells, welches geeignet ist, basierend auf Bildinformationen über zumindest einen Teil einer Oberfläche des Gegenstands eine zugehörige räumliche Ausrichtung des Gegenstands zu bestimmen, wobei das auf künstlicher Intelligenz beruhende computerimplementierte Modell mittels synthetisch erzeugter Trainingsdaten umfassend synthetisch erzeugte Bildinformationen über zumindest einen Teil einer Oberfläche des Gegenstands als Eingangsdaten und zugehörige räumliche Ausrichtungen des Gegenstands als Ausgangsdaten trainiert wurde; und
- Manipulieren oder Steuern eines Manipulierens des Gegenstands basierend auf der zuvor bestimmten räumlichen Ausrichtung des Gegenstands.

2. Verfahren nach Anspruch 1, wobei das Bestimmen der räumlichen Ausrichtung des Gegenstands zumindest teilweise unabhängig von einer speziell dazu vorgesehenen Kennzeichnung, Markierung und/oder Beschriftung des Gegenstands erfolgt.

3. Verfahren nach einem der Ansprüche 1 oder 2, wobei der Gegenstand
- ein konturarmer Gegenstand ist,
- eine im Wesentlichen rotationssymmetrische Form um eine Rotationsachse aufweist,
- eine kreiszylindrische Form aufweist, und/oder
- ein Behältnis, vorzugsweise eine Dose oder ein Eimer, ist.

4. Verfahren nach einem der Ansprüche 1 bis 3, wobei die zu bestimmende räumliche Ausrichtung des Gegenstands einer Drehung des Gegenstands um eine Rotationsachse des Gegenstands gegenüber einem vorbestimmten Nullpunkt der Drehung entspricht.

5. Verfahren nach einem der Ansprüche 1 bis 4, wobei das Manipulieren oder Steuern eines Manipulierens des Gegenstands umfasst:
- Bereitstellen von Informationen über die zuvor bestimmte räumliche Ausrichtung des Gegenstands, vorzugsweise an eine Dreheinheit.

6. Verfahren nach einem der Ansprüche 1 bis 5, wobei das Verfahren weiterhin einen oder mehrere der folgenden Schritte umfasst:
- Bestimmen, vorzugsweise mittels zumindest einer Lichtschranke, dass sich der Gegenstand in einem Sichtfeld von zumindest einer Kamera befindet;
- Aufnehmen mindestens eines Bildes mittels der zumindest einen Kamera, wenn bestimmt wird, dass sich der Gegenstand in dem Sichtfeld befindet, wobei in dem mindestens einen Bild eine Darstellung des zumindest einen Teils der Oberfläche des Gegenstands enthalten ist;
- Ableiten der Bildinformationen über den zumindest einen Teil der Oberfläche des Gegenstands aus dem mindestens einen Bild;
- Bereitstellen der Bildinformationen.

7. Verfahren nach Anspruch 6, wobei sich der Gegenstand vor, während und/oder nach der Aufnahme des mindestens einen Bildes kontinuierlich und/oder ungebremst auf einer Fördereinrichtung bewegt.

8. Verfahren nach einem der Ansprüche 1 bis 7, wobei das Verfahren, vor dem Bestimmen der räumlichen Ausrichtung des Gegenstands, ferner einen oder mehrere der folgenden Schritte umfasst:
- Erzeugen eines computerimplementierten räumlichen Modells des Gegenstands basierend auf bereits vorhandenen Informationen über den Gegenstand;
- Bereitstellen einer Vielzahl synthetisch erzeugter Trainingsbilder zumindest teilweise basierend auf dem computerimplementierten räumlichen Modell des Gegenstands, wobei in jedem Trainingsbild der Vielzahl von Trainingsbildern eine basierend auf dem räumlichen Modell synthetisch erzeugte Darstellung zumindest eines Teils einer Oberfläche des Gegenstands enthalten ist;
- Bereitstellen einer Vielzahl räumlicher Ausrichtungen des Gegenstands zumindest teilweise basierend auf dem computerimplementierten räumlichen Modell des Gegenstands, wobei jedem Trainingsbild eine räumliche Ausrichtung der Vielzahl räumlicher Ausrichtungen zugeordnet ist;
- Erzeugen des auf künstlicher Intelligenz beruhenden computerimplementierten Modells zumindest basierend auf der Vielzahl synthetisch erzeugter Trainingsbilder und der Vielzahl räumlicher Ausrichtungen.

9. Verfahren nach Anspruch 8, wobei die bereits vorhandenen Informationen über den Gegenstand zumindest die folgenden Informationen umfassen:
- erste Informationen, vorzugsweise in zwei räumlichen Dimensionen, über ein(en) an und/oder auf dem Gegenstand angebrachte Beschriftung, Etikett und/oder Aufkleber, und
- zweite Informationen, vorzugsweise in drei räumlichen Dimensionen, über eine geometrische Form des Gegenstands;
- wobei das Erzeugen des computerimplementierten räumlichen Modells des Gegenstands sowohl auf den ersten Informationen als auch auf den zweiten Informationen basiert.

10. Verfahren nach einem der vorherigen Ansprüche, wobei das Manipulieren des Gegenstands einen oder mehrere der folgenden Schritte umfasst:
- räumliches Ausrichten des Gegenstands;
- Drehen des Gegenstands;
- Kippen des Gegenstands;
- Ausrichten einer/s auf den Gegenstand anzubringenden Beschriftung, Etiketts und/oder Aufklebers; und/oder
- Aufbringen einer Beschriftung, eines Etiketts und/oder eines Aufklebers auf den Gegenstand.

11. Vorrichtung, welche dazu eingerichtet ist oder Mittel umfasst, ein Verfahren nach einem der Ansprüche 1 bis 10 durchzuführen und/oder zu steuern.

12. System, welches dazu eingerichtet ist oder Mittel umfasst, ein Verfahren nach einem der Ansprüche 1 bis 10 durchzuführen und/oder zu steuern.

13. System nach Anspruch 12, wobei die Mittel umfassen:
- einen Computer,
- eine Kamera,
- eine Lichtschranke,
- eine Dreheinheit,
- einen Bildschirm, und/oder
- ein computerlesbares Medium.

14. Computerprogramm, umfassend Befehle, die einen Prozessor zur Ausführung und/oder Steuerung eines Verfahrens nach einem der Ansprüche 1 bis 10 veranlassen, wenn das Computerprogramm auf dem Prozessor ausgeführt wird.

15. Computerlesbares Medium, auf dem das Computerprogramm nach Anspruch 14 gespeichert ist.
